# FASCICULE DE BREVET EUROPEEN

(11) **EP 3 785 464 B1**
(45) Date de publication et mention de la délivrance du brevet: **02.11.2022**
(21) Numéro de dépôt: 19728363.3
(22) Date de dépôt: 28.05.2019
(51) Int. Cl.: H04W 24/02, H04M 7/00

(54) **PROCÉDÉ D'ASSOCIATION D'UN NOUVEAU NOEUD DE COLLECTE DANS UN RESEAU SANS FIL DISTRIBUÉ**
VERFAHREN ZUR ZUWEISUNG EINES NEUEN SAMMELKNOTENS IN EINEM VERTEILTEN DRAHTLOSEN NETZWERK
METHOD FOR ASSOCIATING A NEW COLLECTION NODE IN A DISTRIBUTED WIRELESS NETWORK

(30) Priorité: 31.05.2018 FR 1854677
(43) Date de publication de la demande: 03.03.2021
(73) Titulaire: SAGEMCOM BROADBAND SAS, 92500 Rueil-Malmaison (FR)
(72) Inventeur: RABY, Florent, 92500 RUEIL MALMAISON (FR); TOCHE, Clément, 92500 RUEIL MALMAISON (FR); LALAM, Massinissa, 92500 RUEIL MALMAISON (FR); JAULIN, Jean-Philippe, 92500 RUEIL MALMAISON (FR)
(74) Mandataire: Cabinet Le Guen Maillet
(86) Numéro de dépôt international: PCT/EP2019/063718
(87) Numéro de publication internationale: WO 2019/229016

(56) Documents cités:
- US-A1- 2014 204 727
- US-A1- 2017 135 104
- US-A1- 2017 272 273
- Unknown: "Wi-Fi Protected Setup", Wikipedia , 4 mai 2018 (2018-05-04), XP002785118, Extrait de l'Internet: URL:https://en.wikipedia.org/w/index.php?t itle=Wi-Fi_Protected_Setup&oldid=839676234 [extrait le 2018-09-26]

## Description

La présente demande concerne le domaine des réseaux de communication sans fil conformes à l'une des normes IEEE 802.11 (« Institute of Electrical and Electronics Engineers » en anglais), c'est-à-dire celui des réseaux de communication sans fil communément appelés réseaux « Wi-Fi ». La présente demande concerne plus particulièrement un procédé d'association d'un nouveau nœud dans un réseau Wi-Fi.

Un réseau de communication sans fil (ci-après « réseau ») conforme à l'une des normes IEEE 802.11 comprend typiquement une pluralité de nœuds. Chaque nœud est un dispositif électronique comprenant *a minima* un module radio fréquence permettant l'établissement de communications conformément à l'une des normes IEEE 802.11, ou dit autrement, conformément à l'une des normes Wi-Fi. Un tel réseau comprend typiquement un dispositif électronique dit maître, communément appelé point d'accès *(« Access Point* » en anglais, ou « AP ») et une pluralité de dispositifs électroniques dits utilisateurs (ou clients) pouvant établir des connexions sans fil avec le point d'accès et/ou entre elles. Dans un environnement résidentiel, le dispositif électronique maître, ou point d'accès, est typiquement une *« box »* fournie par un opérateur Internet, c'est-à-dire une passerelle domestique (« *home gateway* », ou « *residential gateway* », en anglais). Les dispositifs électroniques utilisateurs sont typiquement des ordinateurs, télévisions, tablettes ou téléphones dits « *intelligents* » (« *smartphone* » en anglais). On dit ainsi communément que les dispositifs électroniques utilisateurs sont associés « *en Wi-Fi* » avec le point d'accès.

L'architecture d'un réseau Wi-Fi peut aussi être distribuée, afin par exemple d'étendre la portée du réseau ou d'augmenter ses performances, par l'utilisation d'une pluralité de points d'accès. L'architecture d'un réseau Wi-Fi distribuée est différente de la précédente architecture succinctement décrite, un réseau Wi-Fi distribué comprenant au minimum deux réseaux :
- un réseau dit de collecte ou d'infrastructure (« *backhaul* » en anglais), permettant de relier les points d'accès entre eux et de constituer une infrastructure réseau suivant une architecture réseau de type mixte étoile et/ou chaîne, ce réseau de collecte peut être un réseau sans-fil (par exemple Wi-Fi), filaire (par exemple Ethernet) ou un mélange des deux,
- un réseau Wi-Fi dit utilisateur (ou client) («*fronthaul* » en anglais), permettant une connexion de nœuds (ou dispositifs électroniques) dits utilisateurs (ou clients) au réseau Wi-Fi distribué.

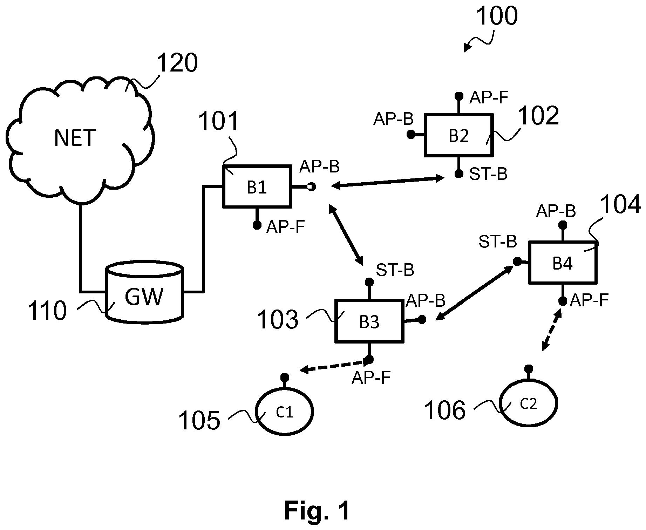

La **Fig. 1** illustre de façon très schématique un tel réseau Wi-Fi distribué 100. Le réseau distribué 100 comprend une passerelle 110 (ou « *gateway* » en anglais) et une pluralité de nœuds ou dispositifs électroniques B1 101, B2 102, B3 103, B4 104, C1 105 et C2 106. La passerelle 110 permet une interconnexion du réseau 100 avec un réseau 120, par exemple le réseau Internet. Dans cet exemple, les nœuds B1, B2, B3 et B4 sont des nœuds dits de collecte. Ces nœuds B1, B2, B3 et B4 constituent l'infrastructure de collecte (« *backhaul* ») du réseau 100. Les nœuds C1 et C2 sont deux nœuds utilisateurs connectés à des nœuds de collecte (respectivement les nœuds B3 et B4). Les nœuds de collecte B1, B2, B3 et B4 gèrent deux réseaux Wi-Fi :
- un premier réseau Wi-Fi, dédié à la collecte, permet une association de chaque nœud de collecte au réseau distribué 100, possiblement de façon chaînée,
- un deuxième réseau Wi-Fi est dédié à l'association des nœuds utilisateurs, de façon similaire à un réseau Wi-Fi non distribué.

Ainsi, chaque nœuds B1, B2, B3 et B4 de l'infrastructure comprend une pluralité d'interface radio :
- une interface radio dite « AP-B » (pour « *Access Point Backhaul* » en anglais) correspondant à une interface point d'accès du réseau Wi-Fi dédié à la collecte,
- une interface radio « STA-B » (pour « *Station Backhaul* » en anglais) correspondant à une interface utilisateur (ou client) du réseau Wi-Fi dédié à la collecte,
- une interface radio « AP-F » (pour « *Access Point Fronthaul* » en anglais) correspondant à une interface point d'accès du réseau Wi-Fi dédié à l'association de nœuds utilisateurs du réseau distribué 100.

Dans l'exemple illustré dans la Fig. 1, le nœud B1 101 est connecté de façon filaire à la passerelle GW 110, par exemple via une connexion Ethernet. Selon un mode de réalisation, la connexion entre la passerelle GW 110 et le nœud B1 101 peut être réalisée par une connexion Wi-Fi. Selon un mode de réalisation complémentaire la passerelle GW 110 et le nœud B1 101 sont un seul et même dispositif électronique, ledit dispositif électronique comprenant les fonctionnalités de la passerelle GW 110 et du nœud B1 101.

Chaque nœud de collecte B1, B2, B3 ou B4 peut donc possiblement établir une connexion vers un autre nœud de collecte afin de constituer l'infrastructure de collecte du réseau distribué 100. Plus précisément, un nœud de collecte peut, via son interface radio « STA-B » établir une connexion vers une interface radio « AP-B » d'un autre nœud de collecte afin de constituer une chaîne de nœud de collecte. Il est à noter que selon un mode de réalisation complémentaire certains nœuds de collecte peuvent être connectés via une liaison filaire, par exemple de type Ethernet.

Une interface radio AP-B, point d'accès du réseau Wi-Fi dédié à la collecte, établit un réseau Wi-Fi associé à un identifiant réseau SSID (« *Service set identifier* » en anglais) correspondant au réseau de collecte. Ce SSID peut être masqué, c'est-à-dire qu'il n'est pas diffusé par l'interface radio AP-B des nœuds de collecte. Un nœud de collecte doit donc connaître ce SSID pour établir une connexion Wi-Fi vers un autre nœud de collecte. Possiblement, le réseau Wi-Fi de collecte est protégé par une clef de sécurité (par exemple selon un mécanisme de type WPA pour *« Wi-Fi Protected Access* » en anglais), clef de sécurité qui nécessite aussi d'être connue des nœuds de collecte. Un nœud de collecte est adapté pour retransmettre le trafic (c'est-à-dire des données, échangées dans des messages) reçu via ses interfaces radios « point d'accès » utilisateurs et de collecte vers son interface radio « utilisateur » de collecte afin de remonter le trafic reçu vers un nœud central du réseau distribué, ici le nœud B1 101. De même, un nœud de collecte est adapté pour redistribuer le trafic reçu via son interface radio « utilisateur » de collecte vers l'une et/ou l'autre de ses interfaces radios « point d'accès » utilisateurs et de collecte. Dit autrement, dans l'exemple illustré dans la Fig. 1, le nœud de collecte B3 103 est adapté pour :
- recevoir du trafic collecté par le nœud B4 104 via son interface radio AP-B,
- recevoir du trafic de nœuds utilisateurs connectés, par exemple le nœud utilisateur C1105, via son interface AP-F,
- retransmettre lesdits trafics reçus vers le nœud de collecte B1 101 via son interface radio utilisateur de collecte ST-B, et,
- inversement, rediriger du trafic reçu via son interface radio utilisateur de collecte ST-B vers le nœud B4 104 via son interface AP-B et/ou le nœud de collecte B1 101 via son interface radio utilisateur de collecte ST-B.

Il existe des procédés permettant une configuration aisée de nœuds utilisateurs pour les connecter à un réseau Wi-Fi. Ainsi, la WFA (pour « *Wi-Fi Alliance* » en anglais) a défini des procédés dits WPS (pour « *Wi-Fi Protected Setup* » en anglais) permettant d'associer aisément un nouveau nœud utilisateur à un réseau Wi-Fi existant. Ces procédés, reposant par exemple sur l'appui sur un bouton d'un nœud et/ou la saisie d'un code, permettent l'association d'un nouveau nœud utilisateur dans un réseau distribué tel le réseau distribué 100. Ces procédés ne sont toutefois pas adaptés pour l'ajout d'un nouveau nœud de collecte dans un réseau distribué tel le réseau distribué 100. En effet, ces procédés nécessitent parfois des actions à réaliser par un utilisateur dans un temps court sur un nœud existant du réseau et sur le nouveau nœud, alors même que le nouveau nœud peut possiblement être éloigné des nœuds existants. Ces procédés peuvent nécessiter la saisie d'un code alors même que le nouveau nœud ne dispose pas d'interface adaptée. <4a>

D'autres procédés ont été proposés, mais ces procédés sont souvent peu pratiques à mettre en œuvre par un utilisateur, ou reposent sur des prérequis techniques rendant ces procédés inapplicables pour des réseaux distribués existants (par exemple, nécessité d'une interface radio de type particulier, non présente sur la majorité des dispositifs électroniques conformes à la norme Wi-Fi).

Il est donc nécessaire de proposer un procédé permettant de pallier ces inconvénients.

L'invention est définie par les revendications ci-après.

Par la suite, l'expression "mode de réalisation (complémentaire) de l'invention" doit être comprise comme "mode de réalisation (complémentaire)". La présente invention est uniquement définie par les revendications.

L'invention concerne un procédé pour un réseau de communication sans fil distribué comprenant au moins un nœud de collecte, chaque nœud de collecte comprenant au moins une interface radiofréquence point d'accès et/ou utilisateur d'un réseau sans fil dit de collecte associé au réseau de communication et une interface radiofréquence point d'accès d'un réseau sans fil dit utilisateur associé au réseau de communication, pour associer un nouveau nœud de collecte, le procédé étant exécuté par un nœud de gestion du réseau de communication et comprenant les étapes de :
- recevoir un message comprenant une information qu'un nouveau nœud de collecte est à associer,
- émettre, à destination de chaque nœud de collecte du réseau de communication, une commande d'activation d'une interface radiofréquence prédéfinie dite d'association,

Le document US 2017/135104 décrit différentes optimisations appliquées dans un réseau de collecte, e.g. utilisation de la bande 5 GHz haute ou basse comme réseau de collecte dédié; utilisation de la bande 2,4 GHz ou Ethernet en renfort.
- recevoir un message indiquant qu'un nouveau nœud de collecte est associé à un nœud de collecte existant via son interface radiofréquence dite d'association,
- déterminer une première validation d'association du nouveau nœud de collecte,
- si l'association est validée, alors, émettre à destination du nouveau nœud de collecte des informations de paramétrages comprenant au moins des informations nécessaires pour une association du nouveau nœud au réseau sans fil de collecte du réseau de communication.

Selon un mode de réalisation complémentaire de l'invention, la commande d'activation de l'interface radiofréquence prédéfinie d'association comprend :
- une commande d'activation d'une interface radiofréquence de type point d'accès, ou,
- une commande d'activation d'une interface radiofréquence de type utilisateur.

Selon un mode de réalisation complémentaire de l'invention, le message comprenant une information qu'un nouveau nœud de collecte est à associer comprenant des informations associées au nouveau nœud de collecte à associer, le procédé comprend une étape préalable à l'émission de la commande d'activation de l'interface radiofréquence prédéfinie dite d'association :
- déterminer une deuxième validation d'association du nouveau nœud de collecte au réseau de communication en fonction des informations associées au nouveau nœud de collecte à associer et d'un identifiant associé au réseau de communication, et,
- ignorer les étapes suivantes du procédé en cas de défaut de deuxième validation.

Selon un mode de réalisation complémentaire de l'invention, le message comprenant une information qu'un nouveau nœud de collecte est à associer comprenant des informations de configuration pour une interface radiofréquence dite d'association, la commande d'activation d'une interface radiofréquence prédéfinie dite d'association comprend lesdites informations de configuration.

Selon un mode de réalisation complémentaire de l'invention, le procédé comprend une étape suivant l'étape de recevoir un message indiquant qu'un nouveau nœud de collecte est associé à un nœud de collecte existant via son interface radiofréquence dite d'association de :
- établir une connexion sécurisée entre le nœud de gestion et le nouveau nœud de collecte.

Selon un mode de réalisation complémentaire de l'invention, le nouveau nœud de collecte comprenant une radio-étiquette, la radio-étiquette comprenant les informations associées au nouveau nœud de collecte à associer, au moins un nœud de collecte du réseau de communication comprenant un lecteur de radio-étiquette, le message comprenant une information qu'un nouveau nœud de collecte est à associer est émis par le nœud de collecte comprenant le lecteur de radio-étiquette suite à la lecture de la radio-étiquette et comprend les informations associées au nouveau nœud de collecte à associer.

L'invention concerne également un nœud de gestion d'un réseau de communication sans fil distribué, le réseau de communication comprenant au moins un nœud de collecte, chaque nœud de collecte comprenant au moins une interface radiofréquence point d'accès et/ou utilisateur d'un réseau sans fil dit de collecte associé au réseau de communication et une interface radiofréquence point d'accès d'un réseau sans fil dit utilisateur associé au réseau de communication, le nœud de gestion étant adapté pour exécuter les étapes du procédé décrit dans le présent document.

Selon un mode de réalisation complémentaire de l'invention, le nœud de gestion est l'un des nœuds de collecte du réseau de communication sans fil distribué.

L'invention concerne également un nœud de collecte d'un réseau de communication sans fil distribué, le nœud de collecte comprenant au moins un module radiofréquence adapté pour une configuration d'interface radiofréquence, le nœud de collecte comprenant une radio-étiquette, la radio-étiquette comprenant des informations de paramétrage d'un réseau sans fil dit d'association, le nœud de collecte étant adapté pour, suite à une mise sous tension :
- détecter la présence d'un réseau sans fil dit d'association,
- s'associer au réseau sans fil dit d'association détecté,
- recevoir des informations de paramétrages comprenant au moins des informations nécessaires pour une association du nœud de collecte à un réseau sans fil de collecte d'un réseau de communication,
- configurer le module radiofréquence afin d'établir une interface radiofréquence utilisateur du réseau sans fil de collecte.

L'invention concerne également un programme d'ordinateur, qui peut être stocké sur un support et/ou téléchargé d'un réseau de communication, afin d'être lu par un processeur d'un nœud d'un réseau de communication sans fil distribué. Ce programme d'ordinateur comprend des instructions pour implémenter tout ou partie des étapes du procédé permettant l'association d'un nœud de collecte, lorsque ledit programme est exécuté par le processeur.

L'invention concerne également un medium de stockage d'informations ou support d'enregistrement comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la **Fig. 1** illustre schématiquement l'architecture d'un réseau de communication sans fil distribué comprenant une pluralité de noeuds, par exemple conforme à une norme IEEE 802.11,
- la **Fig.2** illustre schématiquement un procédé d'association d'un nœud de collecte dans un réseau de communication sans fil distribué, selon un premier mode de réalisation de l'invention,
- la **Fig. 3** illustre schématiquement un procédé d'association d'un nœud de collecte dans un réseau de communication sans fil distribué, selon un deuxième mode de réalisation de l'invention,
- la **Fig. 4** illustre schématiquement l'architecture matérielle d'un nœud de collecte d'un réseau de communication sans fil distribué, le nœud de collecte étant adapté pour exécuter tout ou partie des étapes des procédés illustrés dans la Fig. 2 ou dans la Fig. 3.

L'invention permet à un nouveau nœud de collecte d'un réseau de communication sans fil distribué d'être intégré et configuré de façon simple et sécurisée par un utilisateur du réseau distribué. Le nœud de collecte, une fois configuré, est associé au réseau de collecte et devient lui-même point d'accès possible audit réseau de collecte. Le nœud de collecte peut aussi être configuré pour être un point d'accès au réseau sans fil utilisateur permettant une association de nœuds utilisateurs au réseau de communication sans fil distribué.

L'invention permet de vérifier, lors de l'ajout d'un nouveau nœud de collecte, que cette opération est bien voulue - et autorisée - par un utilisateur du réseau distribué. L'invention permet une configuration automatique du nœud de collecte, afin que celui-ci puisse s'intégrer à l'infrastructure de collecte et puisse collecter le trafic de nœuds utilisateurs du réseau distribué.

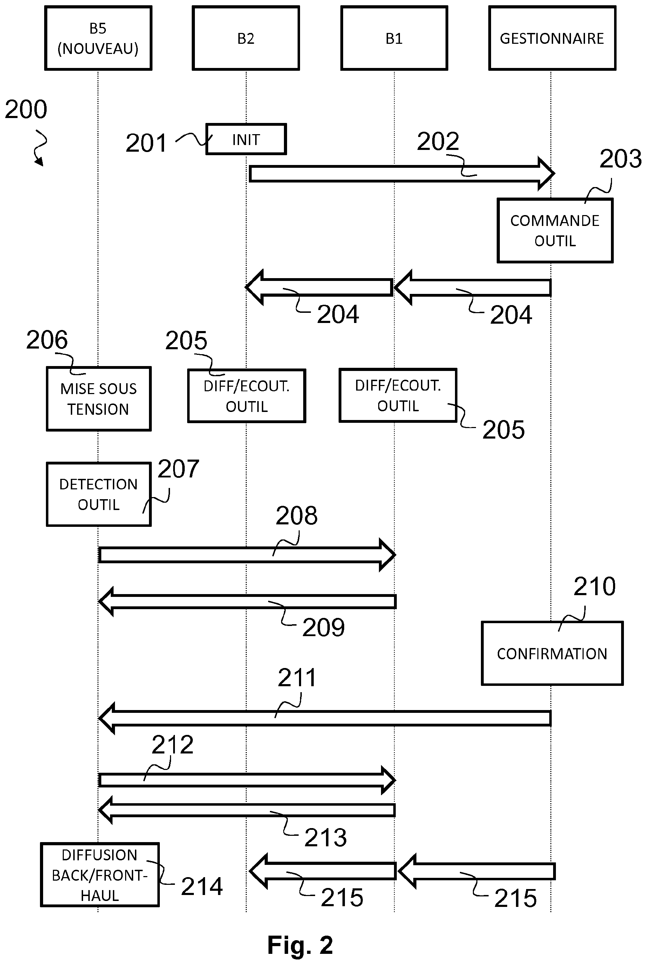

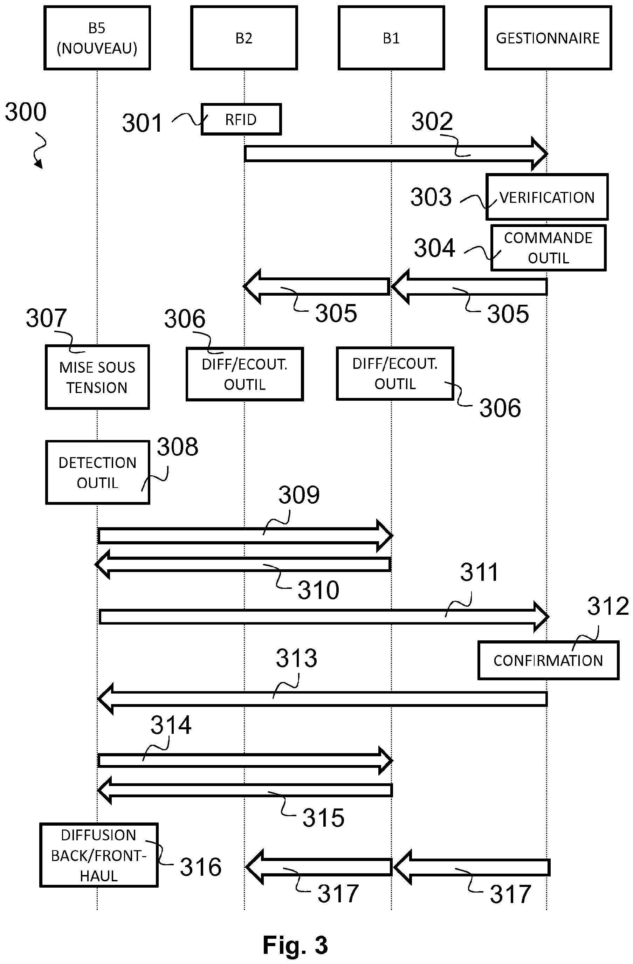

Dans les procédés 200 et 300 illustrés ci-après dans la Fig. 2 et la Fig. 3, le réseau 100 comprend un nœud dit de gestion. Les fonctions dudit nœud de gestion peuvent être intégrées dans l'un des nœuds de collecte du réseau 100, par exemple le nœud dit central B1 101 ou bien être intégrées dans un dispositif électronique dédié du réseau 100. Selon un autre mode de réalisation de l'invention, ces fonctions peuvent être intégrées dans la passerelle 110.

La **Fig. 2** illustre schématiquement un procédé 200 d'association d'un nœud de collecte, par exemple le nœud de collecte B5, dans un réseau de communication sans fil distribué, par exemple le réseau 100, selon un premier mode de réalisation de l'invention.

Dans une première étape 201, le procédé 200 est initialisé. Cette initialisation peut consister en l'appui par un utilisateur du réseau 100 sur un bouton présent sur l'un des dispositifs électroniques du réseau 100, par exemple sur le nœud de gestion ou bien l'un des nœuds de collecte, par exemple ici le nœud B2, du réseau 100. Ainsi, selon un mode de réalisation de l'invention, chaque nœud de collecte comprend un bouton, l'appui par un utilisateur sur ce bouton provoquant l'émission d'un message comprenant une information qu'un nouveau nœud de collecte est à associer au réseau 100, ledit message étant envoyé vers le nœud de gestion du réseau 100. Possiblement, ce message peut être diffusé (« broadcast » en anglais) dans le réseau 100.

Dans une étape suivante 202, le nœud de gestion reçoit donc le message comprenant une information qu'un nouveau nœud de collecte est à associer.

Suite à la réception de ce message, dans une étape 203, le nœud de gestion émet, à destination de chaque nœud de collecte du réseau 100, une commande d'activation d'une interface radiofréquence prédéfinie dite d'association. Cette interface dite d'association est caractérisée par un SSID, et possiblement une clef de sécurité associée. Le SSID dit d'association, et possiblement la clef de sécurité associée, peuvent être préconfigurés lors d'une phase de fabrication des nœuds de collecte. Le SSID dit d'association, et possiblement la clef de sécurité associée, peuvent être configurés lors d'une phase de paramétrage du réseau 100 non décrite dans le présent document. Dans ce cas, le nœud de gestion peut recevoir lesdits SSID et clef de sécurité via une interface de paramétrage suite à la saisie d'un utilisateur du réseau 100, puis préconfigurer chaque nœud de collecte avec ces éléments. Alternativement, les paramètres de configuration de l'interface d'association (SSID et clef de sécurité) peuvent être envoyés à chaque nœud de collecte en association avec la commande d'activation de ladite interface d'association. Dit autrement, la commande d'activation permet d'activer un réseau sans fil dit d'association sur chaque nœud de collecte, ce réseau sans fil d'association étant différent du réseau sans fil de collecte et du réseau sans fil utilisateur.

Dans des étapes similaires 204, la commande d'activation est propagée de proche en proche par les différents nœuds de collecte du réseau 100, et ce jusqu'à atteindre tous les nœuds de collecte du réseau 100.

Selon le mode de réalisation de l'invention, la commande d'activation d'une interface radiofréquence est de type point d'accès ou de type utilisateur. Dit autrement, dans le premier cas, la commande d'activation envoyée permet de configurer chaque nœud de collecte du réseau 100 comme un point d'accès du réseau sans fil d'association. Dans le deuxième cas, chaque nœud de collecte devient un nœud utilisateur potentiel du réseau sans fil d'association, ce dernier devant alors être mis en place et géré par le nouveau nœud de collecte.

Ainsi, dans une étape 205, chaque nœud de collecte, dans le premier cas, devient un point d'accès du réseau sans fil d'association. Dans le deuxième cas, chaque nœud de collecte cherche à détecter le réseau sans fil dit d'association.

Suite à l'étape d'initialisation, nécessitant un appui physique sur un bouton, un utilisateur du réseau 100 peut avoir rejoint une position d'installation du nouveau nœud de collecte B5 et installer ce dernier, particulièrement en le mettant sous tension dans une étape 206. L'initialisation du procédé (étape 201) ne nécessite donc pas que le nouveau nœud de collecte soit mis sous tension, ce qui est particulièrement avantageux si sa position physique est éloignée des autres nœuds de collecte du réseau 100 (dans une pièce éloignée ou à un étage par exemple).

Une fois sous tension, dans une étape 207, le nouveau nœud de collecte B5 cherche soit à se connecter au réseau sans fil d'association (premier cas) ou bien établit un point d'accès pour le réseau sans fil d'association (deuxième cas).

Dans le premier cas, le nouveau nœud de collecte B5 s'associe avec un nœud de collecte proche sur le réseau sans fil dit d'association (étapes 208 et 209). Dans le deuxième cas, c'est l'un des nœuds de collecte ayant détecté le réseau sans fil d'association créé par le nouveau nœud de collecte qui s'associe au nouveau nœud de collecte B5 (non représenté).

La Fig. 2 illustre le premier cas, pour lequel les nœuds de collecte B1 et B2 sont des points d'accès pour le réseau sans fil d'association. Le nouveau nœud de collecte B5 détecte ledit réseau sans fil d'association, et décide dans le cas illustré de s'associer au nœud de collecte B1.

Le nœud de collecte B1 envoie alors un message au nœud de gestion indiquant qu'un nouveau nœud de collecte s'est associé au réseau sans fil d'association.

Dans une étape 210, le nœud de gestion détermine une validation d'association du nouveau nœud de collecte détecté. La validation peut consister en l'affichage d'un message sur une interface d'un des nœuds du réseau 100 et/ou en l'émission d'un signal lumineux et/ou sonore. La validation peut être effectuée au moyen d'une interface de gestion du réseau 100, par exemple une interface web de configuration fournie par le nœud de gestion.

La validation peut comprendre l'interrogation par le nœud de gestion du nouveau nœud de collecte B5 afin de récupérer des informations, comme par exemple un identifiant associé au nœud de collecte B5. L'identifiant peut être par exemple une adresse MAC (« *Media Access Control* » en anglais) de l'interface radiofréquence du nouveau nœud de collecte B5. Le nœud de gestion peut interroger une base de données distante afin de savoir si le nœud de collecte B5 est bien autorisé à se connecter au réseau 100. La base de données distante peut avoir été renseignée lors de l'achat par un utilisateur du nouveau nœud de collecte. Dans ce cas, l'utilisateur ou un opérateur fournissant par exemple l'accès au réseau Internet et les différents dispositifs électroniques constitutifs du réseau 100, peut avoir fourni un identifiant du réseau 100 lors de l'achat, celui-ci étant enregistré dans la base de données en association avec un identifiant du nouveau nœud de collecte acheté. Ainsi, un nouveau nœud de collecte ne peut être associé à un autre réseau que le réseau 100, que ce soit par erreur ou suite à une tentative de connexion du nœud de collecte à un réseau voisin.

Si l'étape 210 de validation est réussie, alors le nœud de gestion envoie au nouveau nœud de collecte B5 des informations de paramétrages comprenant au moins des informations nécessaires pour une association du nouveau nœud au réseau sans fil de collecte du réseau de communication. Ces informations comprennent typiquement le SSID et une clef de sécurité associée du réseau sans fil de collecte.

Suite à cette étape 211, le nouveau nœud de collecte B5 peut, dans les étapes 212 et 213, s'associer au réseau sans fil de collecte via le point d'accès de l'interface radiofréquence du nœud de collecte B1.

Le nœud de gestion peut, soit lors de l'étape 211, soit postérieurement aux étapes 212 et 213, c'est-à-dire une fois que le nœud de collecte B5 est associé au réseau de collecte, émettre un message de configuration comprenant des informations nécessaires pour configurer une interface radiofréquence point d'accès du réseau sans fil utilisateur du réseau 100. Dit autrement, le nœud de gestion peut émettre un message avec le SSID et la clef de sécurité associée pour créer un point d'accès permettant à des nœuds utilisateurs de s'associer au nouveau nœud de collecte de manière similaire aux autres nœuds de collecte.

La **Fig. 3** illustre schématiquement un procédé 300 d'association d'un nœud de collecte, par exemple le nœud de collecte B5, dans un réseau de communication sans fil distribué 100, selon un deuxième mode de réalisation de l'invention.

Le procédé 300 offre plus de sécurisation par rapport au procédé 200 décrit précédemment.

Selon le deuxième mode de réalisation de l'invention, le nouveau nœud de collecte B5 comprend une radio-étiquette (ou « *RFID tag* », pour « *radio frequency identification tag* » en anglais), la radio-étiquette comprenant des informations associées au nouveau nœud de collecte B5 à associer. De même, au moins un nœud de collecte ou le nœud de gestion du réseau de communication 100 comprend un lecteur de radio-étiquette.

Selon un mode de réalisation alternatif de l'invention, la radio-étiquette est remplacée par un QR-code (ou code barre), et le lecteur de radio-étiquette par un lecteur de QR-code.

Le procédé 300, comme le procédé 200, débute par une étape d'initialisation 301 du procédé. Cette étape 301 est toutefois différente en ce qu'elle consiste en la lecture par un nœud de collecte ou le nœud de gestion comprenant un lecteur de radio-étiquette, de la radio-étiquette du nouveau nœud de collecte B5. Un identifiant unique associé au nouveau nœud de collecte B5 peut être compris parmi les informations comprises dans la radio-étiquette.

Dans une étape 302, le nœud de collecte ayant lu la radio-étiquette émet à destination du nœud de gestion, ou possiblement diffuse (« *broadcast* »), un message comprenant une indication qu'un nouveau nœud de collecte est à associer, le message comprenant de plus tout ou partie des informations comprises dans la radio-étiquette lue par le nœud de collecte.

Le nœud de gestion reçoit ledit message. Le nœud de gestion peut, dans une étape 303, procéder à une vérification que le nouveau nœud de collecte est autorisé à s'associer au réseau 100. Cette étape peut prendre plusieurs formes.

Selon une forme, une indication est donnée, par un signal lumineux et/ou sonore sur un des nœuds du réseau 100 qu'un nouveau nœud de collecte cherche à s'associer au réseau 100. Un utilisateur du réseau 100 peut alors devoir exécuter une action prédéfinie pour autoriser la poursuite du procédé 300, ou bien, au contraire, exécuter une action prédéfinie dans un temps donné pour arrêter l'exécution du procédé 300. L'interaction avec l'utilisateur peut se faire au moyen d'une interface de gestion du réseau 100, par exemple une interface web.

Selon une autre forme, le nœud de gestion peut vérifier que des informations reçues lors de l'étape 302 correspondent bien à un critère prédéfini. Par exemple, si un identifiant fourni est une adresse MAC, le nœud de gestion peut conditionner la poursuite du procédé 300 au fait que l'adresse MAC corresponde à un fabricant prédéfini. Selon une variante, le nœud de gestion peut interroger une base de données distante afin de vérifier si un identifiant reçu lors de l'étape 302 est bien enregistré en association avec un identifiant du réseau 100. Cet enregistrement peut avoir été effectué précédemment lors de l'achat par un utilisateur du réseau du nouveau nœud de collecte, ou bien ultérieurement, par un paramétrage par l'utilisateur du réseau via une interface de configuration du réseau.

Dans ce cas, le nœud de gestion détermine une validation d'association du nouveau nœud de collecte au réseau de communication en fonction des informations associées au nouveau nœud de collecte à associer et d'un identifiant associé au réseau de communication.

Si la validation est réussie, alors le nœud de gestion passe à l'étape 304, le nœud de gestion émettant, à destination de chaque nœud de collecte du réseau 100, une commande d'activation d'une interface radiofréquence dite d'association. A la différence de l'étape 203 du procédé 200, les paramètres SSID et clef de sécurité du réseau sans fil d'association peuvent avoir été récupérés dans les informations reçues lors de l'étape 302. Dit autrement, les paramètres SSID et clef de sécurité du réseau sans fil d'association peuvent être encodés dans la radio-étiquette du nouveau nœud de collecte B5.

Dans des étapes 305, la commande d'activation est propagée dans le réseau sans fil de proche en proche, de façon identique à l'étape 204.

Les étapes 306, 307, 308, 309 et 310 sont similaires aux étapes correspondantes 205, 206, 207, 208 et 209 du procédé 200 à ceci près que les paramètres SSID et clef de sécurité du réseau sans fil d'association peuvent avoir été définis d'après des informations encodées dans la radio-étiquette. Dans ce cas, le nouveau nœud de collecte B5 est préconfiguré afin que les informations SSID et clef de sécurité associée correspondent au réseau sans fil d'association.

Afin de renforcer la sécurité du procédé d'association, le procédé 300 comprend une étape 311 d'établissement d'une liaison sécurisée entre le nouveau nœud de collecte et le nœud de gestion. La liaison sécurisée peut être établie par tout moyen connu, par exemple via l'établissement d'un tunnel de type TLS (« *Transport Layer Securiry* » en anglais) ou SSL (« *Secure Sockets Layer* » en anglais). La liaison sécurisée peut être établie au moyen du bus logiciel sécurisé décrit dans la demande de brevet européen EP 2 791 798.

L'étape 312 de vérification de l'autorisation d'association est similaire à l'étape 210 du procédé 200, à ceci près que des informations reçues lors de l'étape 302 peuvent être utilisées.

Les étapes 313, 314, 315, 316 et 317 sont respectivement similaires aux étapes 211, 212, 213, 214 et 215 du procédé 200.

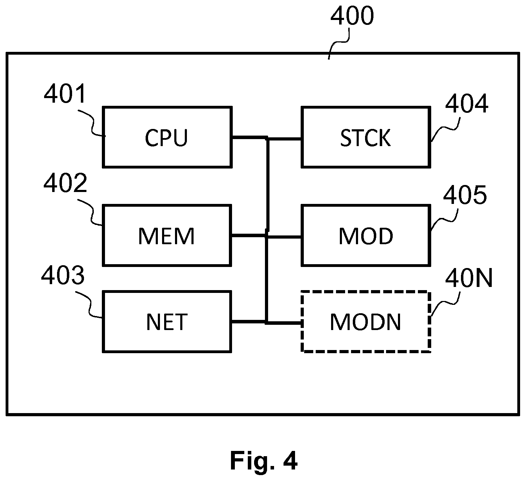

La **Fig.4** illustre schématiquement l'architecture matérielle d'un dispositif électronique ou nœud de collecte d'un réseau de communication sans fil distribué, le nœud de collecte pouvant être le nœud de gestion, et étant adapté pour exécuter tout ou partie des étapes du procédés 200 ou 300 illustré dans la Fig. 2 ou dans la Fig. 3.

Ainsi, le dispositif électronique 400 comprend, reliés par un bus de communication : un processeur ou CPU (« *Central Processing Unit* » en anglais) 401 ; une mémoire MEM 402 de type RAM *(« Random Access Memory* » en anglais) et/ou ROM (« *Read Only Memory* » en anglais), possiblement un module réseau NET 403, par exemple de type Ethernet, un module de stockage STCK 404 de type stockage interne et possiblement une pluralité de modules radiofréquence 405 à 40N conformes à une norme de type IEEE 802.11. Le module de stockage STCK 404 peut être de type disque dur HDD (« *Hard Disk Drive* » en anglais) ou SSD (« *Solid-State Drive* » en anglais), ou de type lecteur de support de stockage externe, tel un lecteur de cartes SD *(« Secure Digital* » en anglais). Le processeur CPU 401 peut enregistrer des données, ou informations, dans la mémoire MEM 402 ou dans le module de stockage STCK 404. Le processeur CPU 401 peut lire des données enregistrées dans la mémoire MEM 402 ou dans le module de stockage STCK 404. Ces données peuvent correspondre à des paramètres de configuration. Le module réseau NET 503, si présent, permet typiquement la connexion du dispositif électronique 400 à un réseau local et/ou Internet. Chaque module radiofréquence 405 à 40N permet au dispositif électronique 400 d'établir une pluralité d'interface radiofréquence conforme à une norme dite Wi-Fi. Une interface radiofréquence peut être un point d'accès Wi-Fi, ou au contraire une interface radiofréquence dite utilisateur permettant une association à une interface radiofréquence dite point d'accès d'un autre dispositif électronique.

Le processeur CPU 401 est capable d'exécuter des instructions chargées dans la mémoire MEM 402, par exemple à partir du module de stockage STCK 404. Lorsque le dispositif électronique 400 est mis sous tension, le processeur CPU 401 est capable de lire de la mémoire MEM 402 des instructions et de les exécuter. Ces instructions forment un programme d'ordinateur causant la mise en œuvre, par le processeur CPU 401, de tout ou partie des procédés et étapes décrits ci-avant, particulièrement le procédé décrit dans la Fig. 2 ou le procédé décrit dans la Fig. 3. Ainsi, tout ou partie des procédés et étapes décrits ci-avant peut être implémenté sous forme logicielle par exécution d'un ensemble d'instructions par une machine programmable, tel qu'un DSP (« *Digital Signal Processor »* en anglais) ou un microcontrôleur. Tout ou partie des procédés et étapes décrits ici peut aussi être implémenté sous forme matérielle par une machine ou un composant dédié, tel qu'un FPGA (« *Field-Programmable Gate Array »* en anglais) ou un ASIC *(« Application-Specific Integrated Circuit »* en anglais). Les fonctions du dispositif électronique 400 peuvent être intégrées dans un nœud d'un réseau sans fil conforme à une norme 802.11 IEEE par une mise à jour d'un logiciel, c'est-à-dire par exemple par mise à jour du microprogramme *(« firmware* » en anglais) du dispositif électronique 400.

## Revendications

1. Procédé d'association d'un nouveau nœud de collecte dans un réseau de communication sans fil distribué conforme à l'une des normes IEEE 802.11 comprenant au moins un nœud de collecte, chaque nœud de collecte comprenant au moins une interface radiofréquence point d'accès (AP-B) et/ou utilisateur (ST-B) d'un réseau sans fil dit de collecte associé au réseau de communication et une interface radiofréquence point d'accès (AP-F) d'un réseau sans fil dit utilisateur associé au réseau de communication, un identifiant réseau dit identifiant réseau de collecte et une clé de sécurité dite clé de sécurité de collecte caractérisant ledit réseau sans fil dit de collecte, le procédé étant exécuté par un nœud de gestion du réseau de communication et étant **caractérisé en ce qu'**il comprend les étapes de :
- recevoir (202) un message comprenant une information que le nouveau nœud de collecte est à associer,
- émettre (203, 204), à destination de chaque nœud de collecte du réseau de communication, une commande d'activation d'une interface radiofréquence dite d'association, ladite commande d'activation permettant d'activer un réseau sans fil dit d'association différent dudit réseau sans fil de collecte et dudit réseau sans fil utilisateur **caractérisée par** un identifiant réseau prédéterminé dit identifiant réseau d'association,
- recevoir (207, 208, 209) un message indiquant que le nouveau nœud de collecte est associé à un nœud de collecte existant via son interface radiofréquence dite d'association,
- déterminer (210) une première validation d'association du nouveau nœud de collecte,
- si l'association est validée, alors, émettre (211) à destination du nouveau nœud de collecte des informations de paramétrages comprenant au moins des informations nécessaires pour une association du nouveau nœud au réseau sans fil de collecte du réseau de communication, lesdites informations comprenant ledit identifiant réseau de collecte et ladite clé de sécurité de collecte.

2. Procédé selon la revendication précédente, la commande d'activation de l'interface radiofréquence d'association comprenant :
- une commande d'activation d'une interface radiofréquence de type point d'accès, ou,
- une commande d'activation d'une interface radiofréquence de type utilisateur.

3. Procédé selon l'une quelconque des revendications précédentes, le message comprenant une information qu'un nouveau nœud de collecte est à associer comprenant des informations associées au nouveau nœud de collecte à associer, le procédé comprenant une étape préalable à l'émission de la commande d'activation de l'interface radiofréquence dite d'association :
- déterminer une deuxième validation d'association du nouveau nœud de collecte au réseau de communication en fonction des informations associées au nouveau nœud de collecte à associer et d'un identifiant associé au réseau de communication, et,
- ignorer les étapes suivantes du procédé en cas de défaut de deuxième validation.

4. Procédé selon l'une quelconque des revendications précédentes, le message comprenant une information qu'un nouveau nœud de collecte est à associer comprenant des informations de configuration pour ladite interface radiofréquence dite d'association, la commande d'activation d'une interface radiofréquence dite d'association comprenant lesdites informations de configuration.

5. Procédé selon l'une quelconque des revendications précédentes, le procédé comprenant une étape suivant l'étape de recevoir un message indiquant qu'un nouveau nœud de collecte est associé à un nœud de collecte existant via son interface radiofréquence dite d'association de :
- établir une connexion sécurisée entre le nœud de gestion et le nouveau nœud de collecte.

6. Procédé selon l'une quelconque des revendications 3 à 5, le nouveau nœud de collecte comprenant une radio-étiquette, la radio-étiquette comprenant les informations associées au nouveau nœud de collecte à associer, au moins un nœud de collecte du réseau de communication comprenant un lecteur de radio-étiquette, le message comprenant une information qu'un nouveau nœud de collecte est à associer étant émis par le nœud de collecte comprenant le lecteur de radio-étiquette suite à la lecture de la radio-étiquette et comprenant les informations associées au nouveau nœud de collecte à associer.

7. Nœud de gestion d'un réseau de communication sans fil distribué conforme à l'une des normes IEEE 802.11, le réseau de communication comprenant au moins un nœud de collecte, chaque nœud de collecte comprenant au moins une interface radiofréquence point d'accès et/ou utilisateur d'un réseau sans fil dit de collecte associé au réseau de communication et une interface radiofréquence point d'accès d'un réseau sans fil dit utilisateur associé au réseau de communication, le nœud de gestion étant **caractérisé en ce qu'**il est adapté pour exécuter les étapes du procédé selon l'une quelconque des revendications précédentes.

8. Nœud de gestion selon la revendication précédente, le nœud de gestion étant l'un des nœuds de collecte du réseau de communication sans fil distribué.

9. Programme d'ordinateur, **caractérisé en ce qu'**il comprend des instructions pour mettre en œuvre, par un processeur (401) d'un nœud de gestion (400) d'un réseau de communication sans fil distribué conforme à l'une des normes IEEE 802.11 comprenant au moins un nœud de collecte, chaque nœud de collecte comprenant au moins une interface radiofréquence point d'accès et/ou utilisateur d'un réseau sans fil dit de collecte associé au réseau de communication et une interface radiofréquence point d'accès d'un réseau sans fil dit utilisateur associé au réseau de communication, un procédé (200, 300) selon l'une des revendications 1 à 6 permettant l'association d'un nouveau nœud de collecte, lorsque le programme d'ordinateur est exécuté par le processeur.

10. Support d'enregistrement sur lequel est stocké le programme d'ordinateur selon la revendication précédente.

## Patentansprüche

1. Verfahren zur Zuordnung eines neuen Sammelknotens in einem verteilten drahtlosen Kommunikationsnetzwerk gemäß einer der Normen IEEE 802.11, das mindestens einen Sammelknoten enthält, wobei jeder Sammelknoten mindestens eine Zugangspunkt- (AP-B) und/oder Benutzer-Funkfrequenzschnittstelle (ST-B) eines dem Kommunikationsnetzwerk zugeordneten drahtlosen so genannten Sammelnetzwerks und eine Zugangspunkt-Funkfrequenzschnittstelle (AP-F) eines dem Kommunikationsnetzwerk zugeordneten drahtlosen so genannten Benutzernetzwerks, eine Sammelnetzwerkkennung genannte Netzwerkkennung und einen Sammelsicherheitsschlüssel genannten Sicherheitsschlüssel enthält, der das drahtlose so genannte Sammelnetzwerk charakterisiert, wobei das Verfahren von einem Verwaltungsknoten des Kommunikationsnetzwerks ausgeführt wird und **dadurch gekennzeichnet ist, dass** es die folgenden Schritte enthält:
- Empfang (202) einer Nachricht, die eine Information enthält, dass der neue Sammelknoten zuzuordnen ist,
- Senden (203, 204) an jeden Sammelknoten des Kommunikationsnetzwerks eines Aktivierungsbefehls einer so genannten Zuordnungs-Funkfrequenzschnittstelle, wobei der Aktivierungsbefehl es ermöglicht, ein drahtloses so genanntes Zuordnungsnetzwerk anders als das drahtlose Sammelnetzwerk und das drahtlose Benutzernetzwerk zu aktivieren, **gekennzeichnet durch** eine Zuordnungsnetzwerkkennung genannte vorbestimmte Netzwerkkennung,
- Empfang (207, 208, 209) einer Nachricht, die anzeigt, dass der neue Sammelknoten einem existierenden Sammelknoten über seine so genannte Zuordnungs-Funkfrequenzschnittstelle zugeordnet ist,
- Bestimmen (210) einer ersten Zuordnungsvalidierung des neuen Sammelknotens,
- wenn die Zuordnung validiert ist, Senden (211) an den neuen Sammelknoten von Parametrierungsinformationen, die mindestens Informationen enthalten, die für eine Zuordnung des neuen Knotens zum drahtlosen Sammelnetzwerk des Kommunikationsnetzwerks notwendig sind, wobei die Informationen die Sammelnetzwerkkennung und den Sammelsicherheitsschlüssel enthalten.

2. Verfahren nach dem vorhergehenden Anspruch, wobei der Aktivierungsbefehl der Zuordnungs-Funkfrequenzschnittstelle enthält:
- einen Aktivierungsbefehl einer Funkfrequenzschnittstelle des Typs Zugangspunkt, oder
- einen Aktivierungsbefehl einer Funkfrequenzschnittstelle des Typs Benutzer.

3. Verfahren nach einem der vorhergehenden Ansprüche, wobei die Nachricht eine Information enthält, dass ein neuer Sammelknoten zuzuordnen ist, die dem zuzuordnenden neuen Sammelknoten zugeordnete Informationen enthält, wobei das Verfahren vor dem Senden des Aktivierungsbefehls der so genannten Zuordnungs-Funkfrequenzschnittstelle einen Schritt enthält:
- Bestimmen einer zweiten Validierung der Zuordnung des neuen Sammelknotens zum Kommunikationsnetzwerk abhängig von den dem zuzuordnenden neuen Sammelknoten zugeordneten Informationen und von einer dem Kommunikationsnetzwerk zugeordneten Kennung, und
- Ignorieren der folgenden Schritte des Verfahrens im Fall eines Fehlens einer zweiten Validierung.

4. Verfahren nach einem der vorhergehenden Ansprüche, wobei die Nachricht, die eine Information enthält, dass ein neuer Sammelknoten zuzuordnen ist, Konfigurationsinformationen für die so genannte Zuordnungs-Funkfrequenzschnittstelle enthält, wobei der Aktivierungsbefehl einer so genannten Zuordnungs-Funkfrequenzschnittstelle die Konfigurationsinformationen enthält.

5. Verfahren nach einem der vorhergehenden Ansprüche, wobei das Verfahren nach dem Schritt des Empfangs einer Nachricht, die anzeigt, dass ein neuer Sammelknoten einem existierenden Sammelknoten über seine so genannte Zuordnungs-Funkfrequenzschnittstelle zugeordnet ist, einen Schritt des:
- Aufbaus einer gesicherten Verbindung zwischen dem Verwaltungsknoten und dem neuen Sammelknoten enthält.

6. Verfahren nach einem der Ansprüche 3 bis 5, wobei der neue Sammelknoten ein Funketikett enthält, wobei das Funketikett die dem zuzuordnenden neuen Sammelknoten zugeordneten Informationen enthält, wobei mindestens ein Sammelknoten des Kommunikationsnetzwerks ein Funketikett-Lesegerät enthält, wobei die Nachricht, die eine Information enthält, dass ein neuer Sammelknoten zuzuordnen ist, vom das Funketikett-Lesegerät enthaltenden Sammelknoten nach dem Lesen des Funketiketts gesendet wird und die dem zuzuordnenden neuen Sammelknoten zugeordneten Informationen enthält.

7. Verwaltungsknoten eines verteilten drahtlosen Kommunikationsnetzwerks gemäß einer der Normen IEEE 802.11, wobei das Kommunikationsnetzwerk mindestens einen Sammelknoten enthält, wobei jeder Sammelknoten mindestens eine Zugangspunkt- und/oder Benutzer-Funkfrequenzschnittstelle eines dem Kommunikationsnetzwerk zugeordneten drahtlosen so genannten Sammelnetzwerks und eine Zugangspunkt-Funkfrequenzschnittstelle eines dem Kommunikationsnetzwerk zugeordneten drahtlosen so genannten Benutzer-Netzwerks enthält, wobei der Verwaltungsknoten **dadurch gekennzeichnet ist, dass** er geeignet ist, die Schritte des Verfahrens nach einem der vorhergehenden Ansprüche auszuführen.

8. Verwaltungsknoten nach dem vorhergehenden Anspruch, wobei der Verwaltungsknoten einer der Sammelknoten des verteilten drahtlosen Kommunikationsnetzwerks ist.

9. Computerprogramm, **dadurch gekennzeichnet, dass** es Anweisungen enthält, um durch einen Prozessor (401) eines Verwaltungsknotens (400) eines verteilten drahtlosen Kommunikationsnetzwerks gemäß einer der Normen IEEE 802.11, das mindestens einen Sammelknoten enthält, wobei jeder Sammelknoten mindestens eine Zugangspunkt- und/oder Benutzer-Funkfrequenzschnittstelle eines dem Kommunikationsnetzwerk zugeordneten drahtlosen so genannten Sammelnetzwerks und eine Zugangspunkt-Funkfrequenzschnittstelle eines dem Kommunikationsnetzwerk zugeordneten drahtlosen so genannten Benutzernetzwerks enthält, ein Verfahren (200, 300) nach einem der Ansprüche 1 bis 6 durchzuführen, das die Zuordnung eines neuen Sammelknotens ermöglicht, wenn das Computerprogramm vom Prozessor ausgeführt wird.

10. Speicherträger, auf dem das Computerprogramm nach dem vorhergehenden Anspruch gespeichert ist.

## Claims

1. Method for associating a new gathering node in a distributed wireless communication network conforming to one of the IEEE 802.11 standards, comprising at least one gathering node, each gathering node comprising at least one access-point (AP-B) and/or user (ST-B) radio-frequency interface of a so-called gathering wireless network associated with the communication network and an access-point radio-frequency interface (AP-F) of a so-called user wireless network associated with the communication network, a network identifier referred to as a gathering network identifier and a security key referred to as a gathering security key characterising said so-called gathering wireless network, the method being executed by a management node of the communication network and being **characterised in that** it comprises the steps of:
- receiving (202) a message comprising information that a new gathering node is to be associated,
- sending (203, 204), to each gathering node in the communication network, a command to activate a so-called association radio-frequency interface, said activation command making it possible to activate a so-called association wireless network different from said gathering wireless network and from said user wireless network, **characterised by** a predetermined network identifier referred to as an association network identifier,
- receiving (207, 208, 209) a message indicating that the new gathering node is associated with an existing gathering node via its so-called association radio-frequency interface,
- determining a first validation of association of the new gathering node,
- if the association is validated, then sending (211) to the new gathering node information on parameterisings comprising at least information necessary for an association of the new node with the gathering wireless network of the communication network, said information comprising said gathering network identifier and said gathering security key.

2. Method according to the preceding claim. the command activating the association radio-frequency interface comprising:
- a command activating a radio-frequency interface of the access-point type, or
- a command activating a radio-frequency interface of the user type.

3. Method according to any one of the preceding claims, the message comprising information that a new gathering node is to be associated comprising information associated with the new gathering node to be associated, the method comprising a step prior to the sending of the command activating the so-called association radio-frequency interface:
- determining a second validation of association of the new gathering node with the communication network according to the information associated with the new gathering node to be associated and according to an identifier associated with the communication network, and
- ignoring the following steps of the method in the event of the lack of a second validation.

4. Method according to any one of the preceding claims, the message comprising information that a new gathering node is to be associated comprising configuration information for said so-called association radio-frequency interface, the command activating a so-called association radio-frequency interface comprising said configuration information.

5. Method according to any one of the preceding claims, the method comprising a step, following the step of receiving a message indicating that a new gathering node is associated with an existing gathering node via its so-called association radio-frequency interface, of:
- establishing a secure connection between the management node and the new gathering node.

6. Method according to any one of claims 3 to 5, the new gathering node comprising a radio tag, the radio tag comprising the information associated with the new gathering node to be associated, at least one gathering node of the communication network comprising a radio-tag reader, the message comprising information that a new gathering node is to be associated being sent by the gathering node comprising the radio-tag reader following the reading of the radio tag and comprising the information associated with the new gathering node to be associated.

7. Management node of a distributed wireless communication network conforming to one of the IEEE 802.11 standards, the communication network comprising at least one gathering node, each gathering node comprising at least one access-point and/or user radio-frequency interface of a so-called gathering wireless network associated with the communication network and an access-point radio-frequency interface of a so-called user wireless network associated with the communication network, the management node being **characterised in that** it is adapted for performing the steps of the method according to any one of the preceding claims.

8. Management node according to the preceding claim, the management node being one of the gathering nodes of the distributed wireless communication network.

9. Computer program, **characterised in that** it comprises instructions for implementing, by a processor (401) of a management node (400) of a distributed wireless communication network conforming to one of the IEEE 802.11 standards comprising at least one gathering node, each gathering node comprising at least one access-point and/or user radio-frequency interface of a so-called gathering wireless network associated with the communication interface and an access-point radio-frequency interface of a so-called user wireless network associated with the communication network, a method (200, 300) according to one of claims 1 to 6 for associating a new gathering node, when the computer program is executed by the processor.

10. Recording medium whereon the computer program according to the preceding claim is stored.
